# EUROPEAN PATENT APPLICATION

(11) **EP 2 262 264 A1**
(43) Date of publication of application: **15.12.2010**
(21) Application number: 09305519.2
(22) Date of filing: 08.06.2009
(51) Int. Cl.: H04N 7/24, H04L 1/00

(54) **Method of generation and transmission of a transport stream with error correction codes**

(71) Applicant: Thomson Licensing SA, 92130 Issy-les-Moulineaux (FR)
(72) Inventor: Colombel, Dominique, 92648 Boulogne cedex (FR); Guery, Pierre-Jean, 92648 Boulogne Cedex (FR); Champel, Mary-Luc, 92648 Boulogne Cedex (FR)
(74) Representative: Le Dantec, Claude

(57) **Abstract**

The invention relates to the field of generation and transmission of a transport stream and more particularly, to the optimization of the generation and the transmission of a transport stream comprising error-code protected multimedia data. To this effect, the invention proposes a method of generation and transmission of at least one transport stream, that comprises successive steps of storing of a first set of data comprising first data representative of multimedia data (301-304) being protected through first error correction codes (310-313); and upon transmission of the at least one transport stream, generation of a second set of data (502) added to the first set of data and being protected through second error correction codes (501); and transmission of the first set of data and the second set of data in the at least one transport stream (55).

## Description

### 1. Field of invention.

The invention relates to the field of generation and transmission of a transport stream and more particularly, to the optimization of the generation and the transmission of a transport stream comprising error-code protected multimedia data.

### 2. Technical background.

According to prior art, a stream of multimedia data, transmitted to a receiver over a network comprises data such as audio, video, audio and video, still images, text, interactive programs, etc, protected by error correction codes (ECC's). These error correction codes are calculated over the multimedia data in order to increase its robustness, i.e. the possibility for receivers to recover from errors in a received multimedia stream. Adding of ECC data to data to transmit in order to increase the possibility of receivers to correct errors in a data stream without needing a retransmission of data received with errors is also called FEC for Forward Error Correction. FEC enables error control for data transmission whereby a transmitter adds redundant data to a data stream, known as Error Correction Code. The maximum fraction of errors that can be corrected by the FEC is determined by the way how the error correction code is calculated. Examples of FEC are block codes, that work on fixed-sized blocks or packets of bits or symbols of a predetermined size, or convolutional codes that work on bit or symbol streams of arbitrary length. Many types of block error correction codes exist, among which are Reed-Solomon or LDPC (Low-Density Parity Check). Other types of error correction codes have been developed for specific use of transmission of digital video streams over IP networks, such as SMPTE 2022 (SMPTE stands for Society of Motion Picture and Television Engineers), which unlike other typical FEC schemes such as Reed-Solomon, relies on very simple algorithms, which is useful in environments where limited resources are available, such as a Set Top Box receiver for Digital Television.

The error correction codes are calculated during transmission time, so as to protect the multimedia stream as it is transmitted over the network, including over any supplementary data added for the transmission, such as enveloping packets according to the used transmission protocol. However, calculating error correction codes is demanding in terms of calculation resources. Therefore, in practice, error correction codes are only generated for multimedia data to be transmitted in a broadcast-like manner, that is, when the same multimedia data can serve many receivers simultaneously. Examples of broadcasting are TV/radio satellite or terrestrial broadcasting or IP multicast over wired or wireless transport media. In the case where individual transmission is needed, i.e. a transmission to only one or to only a limited set of receivers, scaling problems arise when one wants to accompany each of such individual transmissions with error correction codes. Where one transmitter can calculate error correction codes for several dozens of streams that are broadcasted in a one-to-many fashion to thousands of receivers at the same time, error code generation becomes very resource demanding for a transmitter in an on-demand, one-to-one environment, where error correction codes must be calculated for each individual connection, also called a session. Thus, with prior-art generation of error correction, generation of error correction codes for a limited, fixed number of broadcasted multimedia data streams is not posing any problem, while this is not true for on-demand multimedia data streams, where one on-demand multimedia data stream server must generate an error correction stream for each session. Then, according to prior art, and taking into account the above described scalability problem, in order to allow receivers of audio/video on demand to recover from transmission errors, other solutions have been developed, such as enforcing the robustness of a transmitted audio/video stream for example by reducing its bit rate or by using encoding techniques that makes a multimedia data stream less sensitive to packet errors or dropouts caused by its transport, or by reducing the complexity of an accompanying error correction code stream. These prior art solutions have drawbacks such as reduction of rendering quality of the stream of audio/video data. Another solution is to resend multimedia data packets, on request, when a receiver encounters errors in a received multimedia data stream that it can not repair. This solution has disadvantages of scalability (when a lot of receivers encounter errors and request resend, this has an important impact on the performance of the multimedia data stream server) and requires a bidirectional communication channel.

Thus, the prior art does not allow an optimized generation and transmission of transport stream comprising error-code protected multimedia data.

### 3. Summary of the invention.

The present invention aims at alleviating the inconveniences of prior art.

More precisely, the current invention allows optimized generation and transmission of a transport stream comprising error-code protected multimedia data.

In particular, the current invention allows optimization of the use of resources needed for accompanying multimedia on demand streams with error correction codes.

As mentioned before, accompanying multimedia on demand streams with error correction codes particularly impacts the processing resources needed for a multimedia on demand server. It would therefore be desirable to reduce the impact on resources needed to accompany multimedia on demand streams with error correction codes.

To this effect, the invention proposes a method of generation and transmission of at least one transport stream, that comprises successive steps of storing of a first set of data comprising first data representative of multimedia data being protected through first error correction codes; and upon transmission of the at least one transport stream, generation of a second set of data added to the first set of data and being protected through second error correction codes; and transmission of the first set of data and the second set of data in the at least one transport stream.

According to a variant of the method of generation and transmission of at least one transport stream, the second set of data comprises receiver address data of a destination of the transmission.

According to a variant of the method of generation and transmission of at least one transport stream, the second set of data comprises transmission protocol specific data.

According to a variant of the method of generation and transmission of at least one transport stream, the second set of data comprises session specific data.

According to a variant of the method of generation and transmission of at least one transport stream further comprises a step of storing of index data relating the first error correction codes to the multimedia data.

According to a variant of the method of generation and transmission of at least one transport stream, the second error correction codes protect the first set of data and said second data.

### 4. List of figures.

More advantages of the invention will appear through the description of particular, non-restricting embodiments of the invention. The embodiments will be described with reference to the following figures:
- Figure 1 shows an example embodiment of the invention in a network infrastructure that is compatible with the invention and that includes several receivers connected to a delivery network;
- Figure 2 shows a device implementing the invention, such as MMOD platform 11 of figure 1, according a particular embodiment of the invention.
- Figure 3 shows how multimedia file data and ECC data are related through index data according to a particular embodiment of the invention.
- Figures 4 and 5 shows data, stored and/or generated and/or transmitted for example by MMOD platform 11 of figures 1 and 2, according to a particular embodiment of the invention.
- Figure 6 shows an algorithm of generation and transmission of a transport stream, implemented for example by MMOD platform 11 of figures 1 and 2 according to a particular embodiment of the invention.

### 5. Detailed description of the invention.

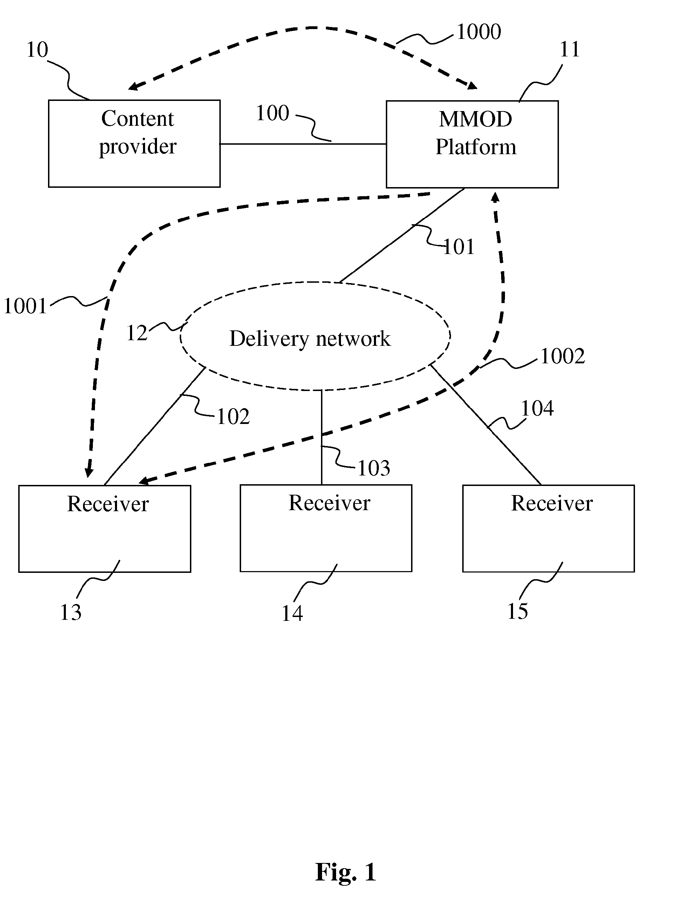

**Figure 1** shows example embodiment of the invention in a network infrastructure that is compatible with the invention.

The infrastructure comprises:
- a content provider 10;
- a multimedia on demand (MMOD) platform 11;
- a delivery network 12; and
- three receivers 13, 14 and 15.
   Content provider 10 is linked to MMOD platform 11 via a connection 100. MMOD platform 11 is linked to delivery network 12 via a connection 101. Receivers 13, respectively 14 and 15, are linked to a delivery network 12 via a connection 102, respectively 103 and 104. Dotted arrows 1000, 1001 and 1002 indicate virtual links, over which data- and/or control flows. These comprise: a bidirectional virtual link 1000 that interconnects content provider 10 with MMOD platform 11; a unidirectional virtual link 1001, that connects receiver 13 to MMOD platform 11; and a bidirectional link 1002, that interconnects MMOD platform 11 with receiver 13.

Virtual link 1000 (through physical link 100) is used for transmission of multimedia data files and metadata accompanying this multimedia data files, as well as for transmission and reception of other data needed for communication between MMOD platform 11 and content provider 10. Virtual link 1001 (through physical links 101 and 102, respectively 101 and 103, respectively 102 and 104) is used for data communication and negotiation prior to transmission of transport stream(s) to any of the receivers 13 to 15. Virtual link 1001 (through physical links 101 and 102, respectively 101 and 103, respectively 102 and 104) is used for transmission of transport stream(s) to any of the receivers 13 to 15.

Content provider 10 provides multimedia data file and associated metadata file to MMOD platform 11. MMOD platform 11 comprises elements for storing of content provided by content provider 10, for receiver/user authentication and authorization and for content browsing and metadata provision for available multimedia on demand services for receivers 13 to 15. Receivers 13 to 15 comprise content browsing presentation and metadata presentation as well as content rendering to users of these devices.

Initially, MMOD platform 11 selects and downloads multimedia data files and associated metadata from content provider 10 over virtual link 1000 (physical link 100). Associated metadata comprises for example information on the size of the multimedia file, its source encoding method, its encoding bit rate, information that is needed by MMOD platform 11 to store and process the file, but also comprises information that is destined for presentation to a user of receiver 13 to 15, such as participating actors, movie reviews, trailers, rating, and so on. The multimedia data and associated metadata is downloaded in local storage of MMOD platform 11. Typically, multimedia data is stored in a file, and metadata is stored in a database, augmented with metadata added by MMOD platform 11 as needed.

With the help of a user authentication/authorization function in MMOD platform 11, the latter allows users of receivers 13 to 15 to identify themselves to MMOD platform 11 and to obtain authorization to browse and select multimedia content. With the help of a presentation portal application, MMOD platform 11 provides the possibility for receivers 13 to 15 to browse and select stored multimedia content stored by MMOD platform 11. These exchanges that are prior to streaming of multimedia content to a receiver are done using virtual link 1002 (physical links 101/102, respectively 101/103, respectively 101/104).

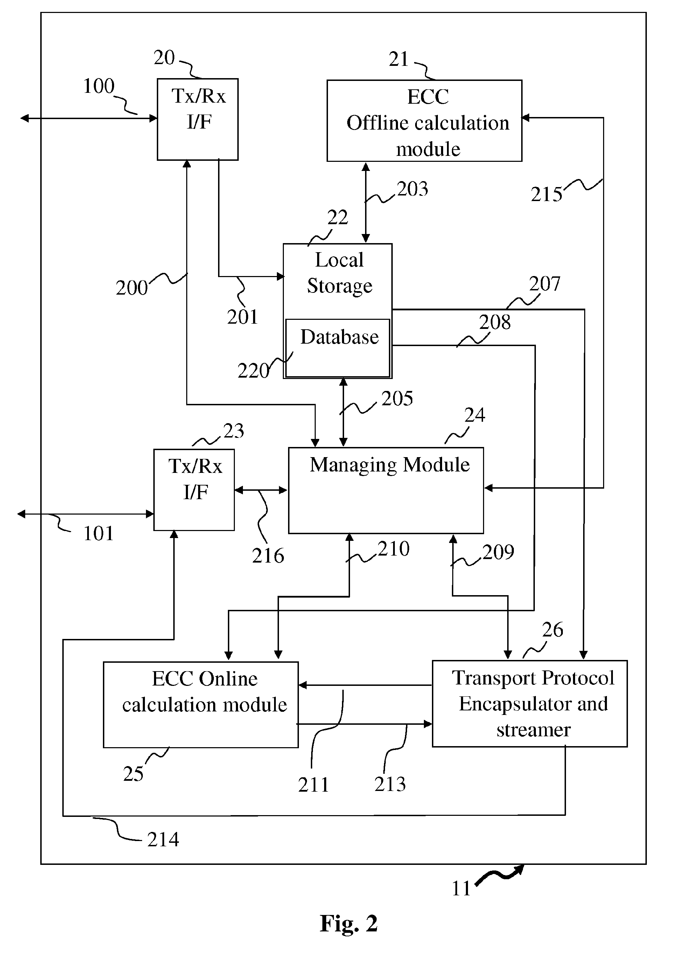

The elements of MMOD platform 11 are further detailed in Figure 2.

**Figure 2** shows a device implementing the invention, such as MMOD platform 11 of figure 1, according a particular embodiment of the invention. In the following, the wordings "offline generation of ECC data" and "online generation of ECC data" are used. Offline ECC data is calculated over the media data file as it is stored in local storage. This calculation is offline, that is: it is done to prepare the media data before streaming. Online ECC data is calculated upon streaming, for example over the part of the stream packets that are determined upon transmission, such as receiver address information, packet time-stamps, packet sequence numbers, streaming session-specific information such as streaming session identifiers, protocol-specific information such as specific protocol headers.

The MMOD platform 11 comprises the following elements:
- a first Tx/Rx (Transmission/Reception) interface 20, that allows MMOD platform 11 to obtain multimedia data files and metadata related to these files, such as from content provider 10 of figure 1;
- a second Tx/Rx interface 23, that allows MMOD platform 11 among others to transmit information on multimedia on demand to receivers such as receivers 13 to 15 of Figure 1, to receive multimedia on demand requests from these receivers, and to stream multimedia on demand streams to these receivers.

- a local storage 22, comprising a local data base 220, used for storing obtained multimedia data files and metadata, as well as other data needed for the functioning of MMOD platform 11;
- a first ECC calculation module 21 for offline ECC calculation;
- a second ECC calculation module 25 for online ECC calculation; and
- a managing module 24, controlling the functioning of the device 11.

Device 11 has connections 100 and 101 that connect it with the outside world. Connection 100 links it to content provider 10 of figure 1. Connection 101 links device 11 to delivery network 12 of Figure 1 and thus to receivers 13 to 15 of figure 1.

Managing module 24 is connected to each of the elements 20, 21, 22, 220, 23, 25 and 26 so as to control their functions or to use them. The first Tx/Rx interface 20 is connected to managing module 24 via connection 200 which allows the managing module 24 to communicate with content provider 10, in order to download multimedia data files and metadata, which are stored in local storage 22 and data base 220 via connection 201. The second Tx/Rx interface 23 is connected to managing module 24 via connection 216 allowing the latter to communicate with receivers 13 to 15 of figure 1. Local storage 22 is connected to managing module 24 via link 205, allowing the managing module 24 to store, retrieve and modify content and access the database 220. ECC offline calculation module 21 is linked to managing module 24 via connection 215 allowing the latter to control the function of ECC offline calculation. ECC online calculation module 25 is linked to managing module 24 via connection 210 allowing the managing module 24 to control the function of ECC online calculation. Transport protocol encapsulator and streamer 26 is linked to managing module 24 via connection 209 so that the managing module 24 can control its function. Other internal connections of device 11 will be explained further on.

Managing module 24 communicates with content provider 10 to download a multimedia data file and metadata. For this means, it uses connection 200 that connects it to Tx/Rx interface 20. Upon reception, the requested data is stored in local storage 22 and database 220. Next, managing module 24 sends instructions to ECC offline calculation module 21 via link 215. The ECC offline calculation module 21 reads at least parts of the required multimedia data file and associated metadata from local storage 22 and database 220 via connection 203. The same connection 203 is used by ECC offline calculation module 21 to store offline calculated ECC data calculated over at least parts of the read multimedia file and to store index data relating the offline calculated ECC to specific locations in the multimedia data file. Once this operation is done for the whole multimedia file, the device 11 is ready to receive requests for serving the file in an on-demand streaming session to a receiver.

When the device 11 receives a request to stream a multimedia data file from receiver 13 via connection 216, the managing module 24 instructs the transport protocol encapsulator and streamer 26 via connection 209 to read the stored multimedia file from the local storage 22 via connection 207. According to the instructions of the managing module 24, transport protocol encapsulator and streamer 26 reads the stored multimedia data file, the stored offline calculated ECC data associated to the multimedia data file, and the stored index data relating the data in the stored multimedia data file to the stored ECC data from local storage 22. Using the index data, the transport encapsulator and streamer 26 encapsulates the multimedia data file into transport protocol packets according to the required transport protocol and streams them to ECC online calculation module 25 via connection 211 that links both functions. ECC online calculation module 25 calculates ECC data over each transport protocol packet that it receives from transport protocol encapsulator and streamer sends the online calculated ECC data to transport protocol encapsulator and streamer via connection 213. Transport protocol encapsulator and streamer adds the online calculated ECC data to the transport stream and sends the stream to Tx/Rx interface 23, which transmits the transport stream to receiver 13.

According to a particular embodiment, Managing Module 24 communicates with receiver 13 via connection 216 and interface 23 using the RTSP (Real Time Streaming Protocol, an Internet Engineering Task Force IETF standard published as RFC 2326 (Request For Comments)) protocol, which is a network control protocol for use in entertainment and communication systems to control streaming media servers. The protocol is used to establish and control media sessions between MMOD platform 11 and any of the receivers 13 to 15.

According to a particular embodiment, ECC data and multimedia data are streamed in separate streams, thereby not influencing on the bandwidth needed to transmit the multimedia data stream, and in the same time allowing receivers to choose if they want to connect to the ECC data stream or not; some receivers may even not be capable of handling a stream comprising ECC data. For such cases, transport protocol encapsulator and streamer outputs a stream of multimedia data and a stream of ECC data, and uses the index data to fetch the offline calculated ECC from the local storage that is associated to the multimedia data, sends the transport protocol encapsulated data to the ECC online calculation module 25, retrieves the online calculated ECC from the ECC online calculation module 25 and transmits both the multimedia data stream and the ECC stream, the latter comprising online- and offline calculated ECC.

According to a variant embodiment, the ECC format used for offline and/or online ECC is VSF (Video Services Forum, formerly Pro-MPEG) FEC (SMPTE standard 2022-2007, based on Pro-MPEG COP3), an ECC format that is particularly developed for the transmission of multimedia streams. SMPTE standard 2022 is an open standard for error protection of transmissions over IP networks. It uses the RTP (Real-time Transport Protocol, described in RFC (Request for Comments) 3550) transport protocol, which offers packet sequence recovery, as a building block for providing packet recovery techniques to ensure reliable transport of media. According to the standard, transmission packets are put in a matrix of configurable size, over which FEC 'column' and 'row' packets are calculated with a logical XOR operation. The FEC is said to be one-dimensional when column-only FEC is calculated and two-dimensional when column- and row FEC is calculated. The size of the matrix determines the strength of the error correction code. SMPTE standard 2022 FEC scheme enables broadcasters to select the correct matrix size and FEC scheme allowing the broadcaster to provide the correct level of protection within the transmission constraints such as bandwidth. SMPTE standard 2022 FEC and multimedia streams are transmitted on separate IP streams, thereby not impacting the bit rate of the main multimedia stream and thereby further allowing FEC enabled receivers to use FEC and non-FEC enabled receivers to ignore the row and/or column FEC stream(s). SMPTE standard 2022 FEC data is offset from the multimedia stream to protect against burst error loss and packet jitter, which is particular for transmission of packets over IP. Furthermore, SMPTE standard 2022 FEC is calculated over MPEG-TS transport stream packets and thus is indifferent to the multimedia encoding format such as MPEG2, H.264 and SDI. Therefore, the variant embodiment is particularly advantageous in environments of transmission of multimedia over an IP network.

According to a particular embodiment, the ECC format used for offline and/or online ECC is Reed-Solomon AL-FEC, which has the advantage to be able to correct error types that can not be corrected with SMPTE 2022 FEC, but which is more 'difficult' to compute and decode, thus needing more calculation resources than SMPTE 2022 FEC. This FEC scheme will probably be added to SMPTE 2022 as an alternative FEC coding scheme.

According to a particular embodiment, the format of the online calculated ECC is different from the format of the offline calculated ECC. This particular embodiment has the advantage to allow applying of a lighter, less resource demanding ECC calculation during transmission time and applying of a more resource demanding ECC calculation during preparation for transmission, thereby allowing an optimized balance between the strength of the error protection and the impact on the use of the resources of device 11.

According to a particular embodiment, several ECC streams accompany a multimedia stream at the same time, thereby allowing a receiver to choose the ECC that is best suited to the type of errors that it encounters, or that is best adapted to its ECC processing capacity.

According to a particular embodiment, headers of packets comprising offline calculated ECC and of packets comprising online calculated ECC marked with information allowing a receiver to distinguish offline calculated ECC from online calculated ECC and to apply the correct algorithm of error correction for each of the online and offline calculated ECC according to the ECC calculation that is used.

According to a particular embodiment of the invention, a transmission of multimedia data comprising ECC is accompanied by a transmission of signaling information comprising information on the ECC calculation algorithm used for the online and offline calculated ECC, which allows a receiver to choose the correct algorithm for error correction.

According to a particular embodiment, the multimedia data and metadata delivered by content provider 10 are in a format that can be transmitted to receivers, without modification of the packet structure, encoding format or encoding rate. According to such a particular embodiment, the content server delivers files in an MPEG-TS format (Moving Picture Experts Group - Transport Stream). The advantage of such a format is that it can be directly decoded by numerous receivers that comply to this transport stream standard.

According a particular embodiment, the multimedia data and metadata are delivered by separate devices, such as a dedicated multimedia server and a dedicated metadata server. According to a particular embodiment, this data is delivered over different connections and/or networks, such as a dedicated network or direct connection for high-speed, reliable and secured delivery of multimedia data, and the open internet for low-speed, low volume metadata.

Other structures for a device implementing the invention than that described by figure 2 are compatible with the invention.

According to a particular embodiment, the device 11 does use or comprise an offline ECC calculation module, which is possible when the multimedia data file received from content provider 10 already includes offline calculated ECC.

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

According to a particular embodiment, a device implementing the method of the invention is a personal computer, equipped or not with dedicated hardware.

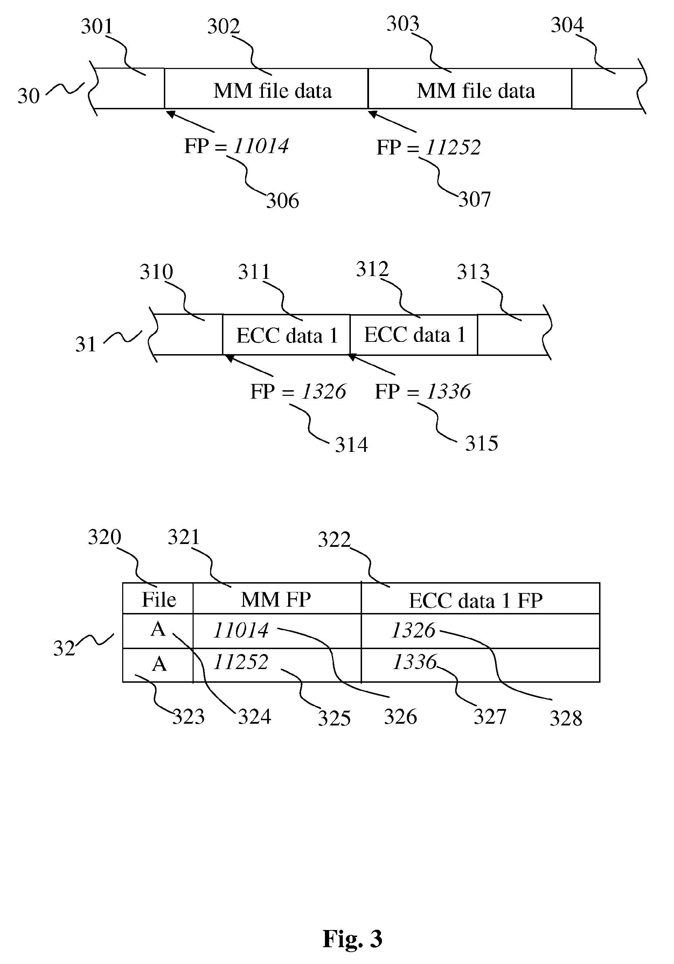

**Figure 3** shows how multimedia file data and ECC data are related through index data according to a particular embodiment of the invention.

Element 30 shows part of a multimedia file as it is stored by a device implementing the invention, such as for example by MMOD platform 11 of figures 1 and 2. According to a particular embodiment of the invention, the multimedia data file as stored is the MPEG2-TS format. Blocks 301 to 304 shows multimedia data blocks, over which ECC data is calculated offline, a calculation done by for example ECC offline calculation module 21. Element 31 shows calculated blocks of ECC data 310 to 313. Element 32 shows an index table or correspondence table which allows storing the relation between the calculated ECC blocks and the part of the multimedia data file to which each ECC block relates.

Returning to element 30, arrows 306 and 307 indicate file pointer values 11014 respectively 11252 that point to starting points of blocks 302 respectively 303 of the multimedia data file. In element 31, arrows 314 and 315 indicate file pointer values 1326 respectively 1336 that point to starting points of ECC data of blocks 311 respectively to 312 of the ECC data file. As mentioned, element 32 represents an index- or correspondence table allowing to relate calculated ECC blocks to blocks in the multimedia data file over which these ECC is calculated. Element 32 comprises a column 320 where an identification of the multimedia data file is stored. This is a file name or number for example. Element 32 further comprises a column 321 where multimedia data file pointer values are stored. Element 32 further comprises a column 322 where ECC data file pointer values are stored. Indicated in the first column of the second row of table 32, element 324 of table 32, is the file identification of the multimedia data file, here represented by the letter 'A'. In the second column of the same row, element 326, is stored the value of multimedia data file pointer 306, namely 11014. In the third column of the same row, element 328, is stored the value of ECC data file pointer 314, namely 1326. Indicated in the first column of the third row of table 32, element 323 of table 32, is the file identification of the multimedia data file, here represented by the letter 'A'. In the second column of the same row, element 325, is stored the value of multimedia data file pointer 307, namely 11252. In the third column of the same row, element 327, is stored the value of ECC data file pointer 315, namely 1336.

According to a variant embodiment, the ECC data is not stored as a file, but ECC data is stored in a data base.

According to a variant embodiment, the multimedia data blocks over which ECC data is calculated are of a fixed, predetermined size, which has the advantage that no index data is needed, since at any time, an ECC block can be related to a block in a multimedia data file by a simple calculation.

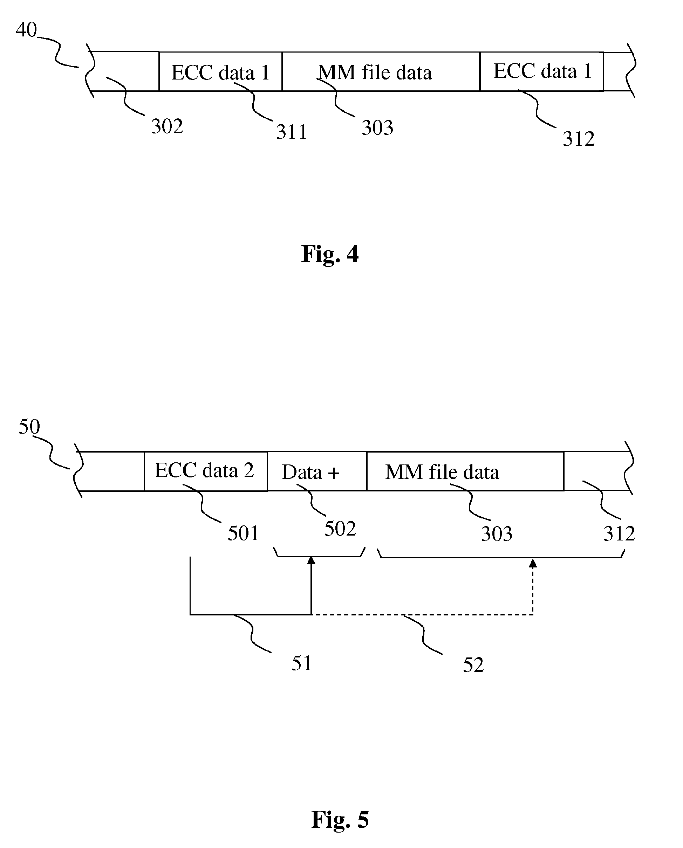

**Figure 4** shows data, stored and/or generated for example by device 11 of figures 1 and 2, according to a particular embodiment of the invention.

Element 40 shows a concatenation of multimedia file data and offline calculated ECC, calculated over the multimedia data. According to a particular embodiment of the invention, this concatenation is done upon transmission of a requested multimedia data file. Upon a variant embodiment of the invention, this concatenation is done when the offline calculation of ECC data is done. In element 40, a first block 302 shows part of multimedia file data 302 of figure 3. This block is followed by a second block that shows ECC data 311 of figure 3 that is calculated over multimedia data file block 302. A third block shows multimedia file data block 303 of figure 3. A fourth block shows ECC data 312 of figure 3 that is calculated over multimedia data file block 303.

**Figure 5** shows data generated for example by device 11 of figures 1 and 2, according to a particular embodiment of the invention.

Element 50 shows a stream of data comprising multimedia data protected by ECC, which is transmitted by a device implementing the invention, such as device 11 of figures 1 and 2. Element 50 comprises a block of additional data 502, generated upon transmission of the multimedia data. Element 50 further comprises a block of ECC data 502, also generated upon transmission of the multimedia data. Element 50 further comprises a block 303 of multimedia data and a block of offline calculated ECC 312 calculated over the multimedia data block 303. Illustrated by arrow 51, the online calculated ECC data block 501 is calculated only over the added data 502. According to a variant of the invention, illustrated by dotted arrow 52, online calculated ECC data 501 is calculated over added data 502 as well as multimedia data 303 and the offline ECC data 312 calculated over multimedia data 303. This variant embodiment advantageously protects not only the added data, but also protects the multimedia data as well as the offline calculated ECC, which offers an additional protection against transmission/reception errors.

As mentioned for figure 2, according to a variant embodiment of the invention, ECC data (offline and online generated) and multimedia data are transmitted in separate streams. According to this embodiment, when multimedia data is to be transmitted, it is retrieved from local storage of device 11. The ECC data to transmit is generated from retrieved offline calculated ECC found in local storage 22, completed with online calculated ECC data, calculated upon transmission. The stored index data allows to retrieve the offline calculated ECC data that is related to the multimedia data to transmit, so that multimedia data and ECC data related to the multimedia data are transmitted simultaneously.

Examples of data that is added upon transmission is receiver (destination) address information, streaming session-specific information such as streaming session identifiers, protocol-specific information such as specific protocol headers, packet sequence numbers, time-stamps and so on.

Typically, according to a particular embodiment of the invention, the additional data 502 that is generated upon transmission of the multimedia data and that is protected by second error correction codes comprises receiver address data of a destination of the transmission.

According to a variant embodiment, the additional data 502 that is generated upon transmission of the multimedia data and that is protected by second error correction codes comprises session specific data.

According to a variant embodiment, the additional data 502 that is generated upon transmission of the multimedia data and that is protected by second error correction codes comprises transmission protocol specific data. These are sorts of data over which no offline error correction code calculation can be done, because this data is known only upon the moment for transmission, i.e. upon transmission time. According to a particular embodiment of the invention, the transmission protocol specific data are RTP headers.

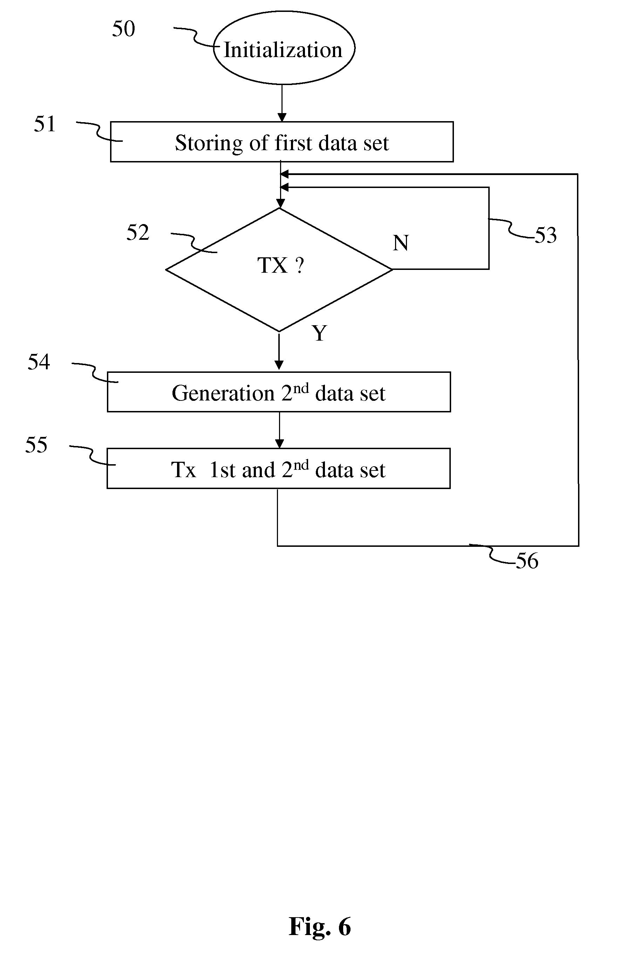

**Figure 6** shows an algorithm corresponding to a method of generation and transmission of at least one transport stream according to a particular embodiment of the invention. The algorithm can for example be implemented by the managing module 24 of MMOD platform 11 of figures 1 and 2. The algorithm starts with initialization step 50, where all variables needed for the algorithm are initialized, such as variables related to the management of database 220 and addresses of receivers 13 to 15. In step 51, a first set of data is stored by Managing Module 24 in local storage 22, the first data set comprising first data representative of multimedia data being protected through first error correction codes. According to a particular embodiment, the first set of data is directly received from a device such as content provider 10, complete with metadata allowing device 11 to relate the first error codes to the multimedia data. According to a variant embodiment, the data received by device 11 does not comprise first error codes, which are then calculated over the multimedia data by offline calculation module 21 of device 11 and then stored in local storage 22 together with the multimedia data. Which variant is used depends on the format of data that is received by the device implementing the method. According to a particular embodiment of the invention, the method illustrated by the algorithm of figure 6 further comprises a step of storing of index data that relates the first correction codes to the multimedia data into database 220, allowing easy finding of the offline generated error correction codes relating to multimedia data upon transmission. In a test step 52, it is determined by Managing Module 24 if transmission of the transport stream(s) is needed. According to a particular embodiment of the invention, the determination is done by the Management Module 24 as a function of a user request for streaming of on-demand multimedia, received from receivers 13 to 15 via Tx/Rx interface 23. According to a variant embodiment, during subsequent iterations of steps 52, 53 and 55, the determination is done by Management Module 24 as a function of the transmission of at least part of the multimedia stream and associated ECC. If not, step 53 is done, allowing waiting for a transmission. Upon transmission, step 54 is done wherein a second data set is generated by ECC online calculation module 25 that is added to the first set of data for transmission of the first data set by Transport Protocol Encapsulator and Streamer 26, and that is being protected through second error correction codes. According to a particular variant embodiment, the second data set is generated by ECC online calculation module 25 and accompanies the transmission of the first data set in separate streams, which are prepared by Transport Protocol Encapsulator and streamer 26. These second error correction codes are calculated online by ECC online calculation module 25, i.e. upon transmission of the transport stream(s). For this generation of the second data set, the first data set is read from storage 22. Finally, in step 55, the first and second data set are transmitted in one or more transport streams by Transport Protocol Encapsulator and streamer 26, and the algorithm reiterates step 52 via branch 56, where the algorithm continues with the execution of steps 54 and 55 as long as the transmission is ongoing.

Of course, the described embodiments are given as example embodiments of the invention, and thereby the invention is not limited to these embodiments. The described embodiments allow a good understanding of the invention.

According to a variant embodiment of the embodiments shown, a network architecture compatible with the invention comprises a content provider 10 that is also connected to delivery network 12.

According to variant embodiment, content provider 10 is connected to MMOD platform 11 via other means than through a direct connection 100 or through delivery network 12, i.e. via yet another network that serves multiple MMOD platforms 11 simultaneously. Of course, the MMOD platform 11 is not limited to serving 3 receivers, but can comprise 1, 2, 3, 5, 10, 100 or even more than 1000 receivers, according to the serving capacity of the MMOD platform 11.

According to a variant embodiment, other, supplementary equipment is needed, such as network switchers / routers, wireless transmitters and receivers, billing equipment, and so on.

According to a variant embodiment, one ore more receivers 13 to 15 of figure 1 are mobile devices, and delivery network 12 comprises equipment allowing mobile communication, for example through the use of Wi-Fi technology. According to a variant embodiment, one or more receivers 13 to 15 are digital Set Top Boxes.

According to a variant embodiment, one or more receivers 13 to 15 of figure 1 are digital television sets, integrating a receiver. According to a variant embodiment, the transmission of the transport stream(s) according to the invention is done using the IP (Internet Protocol).

According to a variant embodiment of the invention, the second data added to the first set of data comprises RTP (Real-Time Protocol, RFC (Request For Comments) 3550) headers, the RTP protocol allowing among others receivers to re-order packets that are received out-of-order.

According to a variant embodiment of the invention, first and second error correction codes are transmitted in one or more streams that are transmitted separately from the multimedia data stream.

According to a variant embodiment, first and second error correction codes are transmitted in so-called line- and column streams, the terms line and column referring to the matrix used for generating the error correction codes.

## Claims

1. Method of generation and transmission of at least one transport stream **characterized in that** said method comprises following successive steps:
- storing of a first set of data comprising first data representative of multimedia data being protected through first error correction codes;
- upon transmission of said at least one transport stream, generation of a second set of data added to said first set of data and being protected through second error correction codes; and
- transmission of said first set of data and said second set of data in said at least one transport stream.

2. Method according to claim 1, **characterized in that** said second set of data comprises receiver address data of a destination of said transmission.

3. Method according to claim 1 or 2, **characterized in that** said second set of data comprises transmission protocol specific data.

4. Method according to any of claims 1 to 3, **characterized in that** said second set of data comprises session specific data.

5. Method according to any of claims 1 to 4, **characterized in that** said method further comprises a step of storing of index data relating said first error correction codes to said multimedia data.

6. Method according to any of claims 1 to 5, **characterized in that** said second error correction codes protect said first set of data and said second set of data.
